# EUROPEAN PATENT APPLICATION

(11) **EP 1 197 901 A2**
(43) Date of publication of application: **17.04.2002**
(21) Application number: 01307006.5
(22) Date of filing: 17.08.2001
(51) Int. Cl.: G06F 17/60

(54) **Reminders for a communication terminal**

(30) Priority: 31.08.2000 GB 0021446
(71) Applicant: Nokia Corporation, 02150 Espoo (FI)
(72) Inventor: McCarthy, Kevin, 3500 Vaerlose (DK)
(74) Representative: Hibbert, Juliet Jane Grace

(57) **Abstract**

A hand-portable communication terminal includes a control unit, a user interface including a display, text input means, and said user interface is controlled by the control unit, and a clock application controlled by the control unit, and having a clock function and a reminder application which the display can present. The reminder application has a text window in which the user through the user interface enters a reminder text label, and a time entry window in which the user through the user interface enters a date and time for the reminder. An alert unit alerts the user when the clock reaches the entered date and time for the reminder.

## Description

The invention relates to a reminder for a communication terminal, e.g. hand-portable phone, not having a calendar application.

During the past years more and more applications are integrated into cellular phones. However these applications require more and more memory space. The memory space requirements increases the cost of the phones. For phones in the basic segment this will cause higher prices. Therefor there exists a need for a reminder application not relying on a calendar application.

According to a first aspect of the invention there is provided a method of handling reminders in a hand-portable communication terminal. This method comprises manually entering characters into a text editor window for providing a reminder text, entering time information into a time entry window for setting a reminder time, providing real time clock information from a clock application, comparing said time information with the real time clock information, and alerting when the real time clock has reached said reminder time. Hereby it becomes possible to enter reminders into a terminal not having a calendar system. The clock provides the clock information and the reminder application initiates individual count downs for the individual reminders.

According to a second aspect of the invention there is provided a hand-portable communication terminal, including a control unit, a user interface including a display, text input means, and said user interface is controlled by the control unit, a clock application controlled by the control unit, and having a clock function and a reminder application which the display can present, said reminder application has a text editor window in which the user through the user interface enters a reminder text label, and a time entry window in which the user through the user interface enters a date and time for the reminder. An alert unit alerts when the clock reaches the entered date and time for the reminder. This concept does not require a lot of memory space because the reminder application may use the text editor from the message application of a telephone, and only a very limited space for the saving of the reminders. According to the preferred embodiment of the invention the text is fully user defined but limited to 36 characters.

Preferably a clock application provides real time clock information to the reminder application, and said reminder application displays a reminder note when the real time clock has been reached the reminder time. Preferably the reminder application provides the user access to "Add new" reminders, "View all" existing reminders and "Erase" existing reminders.

According to the preferred embodiment of the invention the reminder application allows the user to transmit a reminder to a remote second communication terminal via a wireless communication network. Prior to the transmission the reminder application requests the user to enter the phone number of the receiver of the reminder. The reminder application allows the user to search for the phone number of the receiving terminal in an internal phone number database of the transmitting terminal.

According to the preferred embodiment of the invention the reminder application, upon receipt of a reminder, allows the user to inspect a reminder received from a remote second communication terminal via a wireless communication network. Furthermore the reminder application allows the user to save or discard a reminder received from a remote second communication terminal. Preferably the reminders are transferred via the wireless communication network included in a message according to the Smart Messaging Specification.

For a better understanding of the present invention and to understand how the same may be brought into effect reference will now be made by way of example only to the accompanying drawings in which: -
Fig. 1 illustrates a preferred embodiment of a communication terminal according to the invention.
Fig. 2 schematically shows the essential parts of a communication terminal for communication with a cellular network.
Fig. 3 schematically shows a combined state diagram and flow diagram for the reminder editing according to a preferred embodiment of the invention.
Fig. 4 shows phone displays associated with the diagram shown in fig. 3.
Fig. 5 schematically shows a combined state diagram and flow diagram for the reminder handling upon receipt a reminder according to a preferred embodiment of the invention.
Fig. 6 shows phone displays associated with the diagram shown in fig. 5.
Fig. 7 schematically shows a combined state diagram and flow diagram for the reminder handling at the alert time according to a preferred embodiment of the invention.
Fig. 8 shows phone displays associated with the diagram shown in fig. 7.
Fig. 9 schematically shows the architecture of a reminder according to a preferred embodiment of the invention.

### DETAILED DESCRIPTION OF THE INVENTION

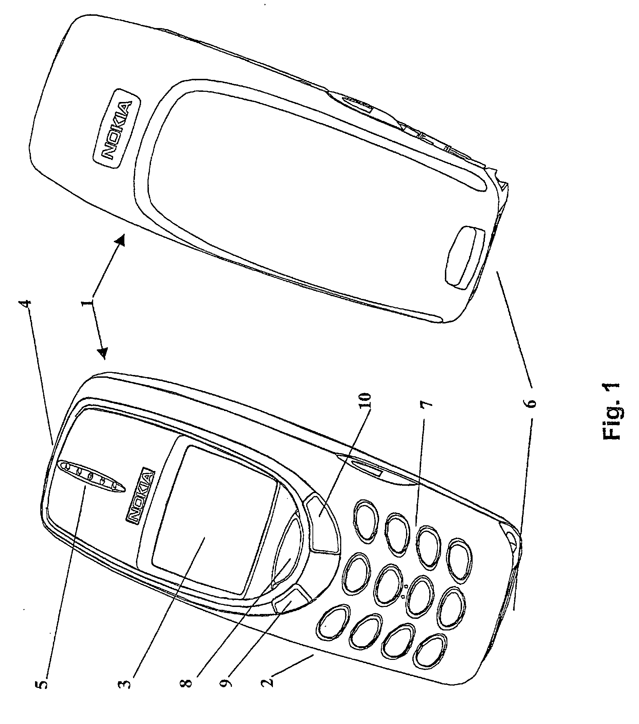

Fig. 1 shows a preferred embodiment of a phone according to the invention, and it will be seen that the phone, which is generally designated by 1, comprises a user interface having a keypad 2, a display 3, an on/off button 4 (present in the top of the phone and therefore not visible in the present view), a speaker 5, and a microphone 6 (openings present in the bottom of the phone and therefore not visible in the present view). The phone 1 according to the preferred embodiment is adapted for communication via a cellular network, such as the GSM 900/1800 MHz network.

According to the preferred embodiment the keypad 2 has a first group 7 of keys as alphanumeric keys, one softkey 8, a cursor navigation key 10 (scroll up/down), and a "clear"-key 9 for erasing letters in text in the display 3, jumping steps down in the menu structure and rejecting calls. The present functionality of the soft key 8 is shown in separate fields (softkey-label) in the display 3 just above the softkey 8. The softkey 8 is a multifunction key and its present function depends on the state of the phone1. The softkey 8 gives access to the menu, the phonebook and call handling.

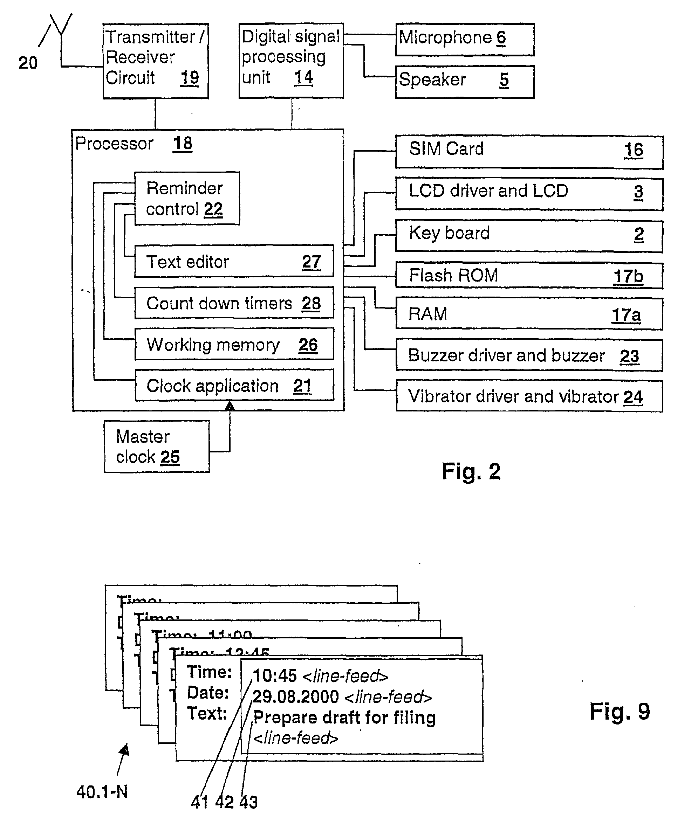

Fig. 2 schematically shows the most important parts of a preferred embodiment of the phone, said parts being essential to the understanding of the invention. The processor 18 controls the communication with the network via the transmitter/receiver circuit 19 and an internal antenna 20.

The microphone 6 transforms the user's speech into analogue signals, the analogue signals formed thereby are A/D converted in an A/D converter (not shown) before the speech is encoded in a digital signal processing unit 14 (DSP). The encoded speech signal is transferred to the processor 18, which i.a. supports the GSM terminal software. The processor 18 also forms the interface to the peripheral units of the apparatus, including a RAM memory 17a and a Flash ROM memory 17b, a SIM card 16, the display 3 and the keypad 2 (as well as data, power supply, etc.). The digital signal-processing unit 14 speech-decodes the signal, which is transferred from the processor 18 to the earpiece 5 via a D/A converter (not shown).

The processor 18 includes a reminder controller 22 controlling the reminder concept according to a preferred embodiment of the invention. The reminder controller 22 is preferably implemented as a software application implemented into the phone software of the terminal 1. The reminder controller 22 is connected to a clock application 21 in the phone used for time stamping of messages, and display of clock information in the display. The clock application 21 is controlled by the master clock 25 of the phone and is therefor very precise. The reminder controller 22 uses a text editor 27 of the phone for the dialogues with the user, i.a. for entering a reminder text and for setting the alerting time and date. These individual reminders are stored on electronic cards 40.1-N and are stored in a non-volatile memory of the phone, e.g. on the SIM card. The cards 40.1-N include a time field having an "hh.mm" format, a date field having a "dd.mm.yyyy" format and a text field allowing the user to enter 36 bytes of data. By this format each reminder requires 48 bytes of data. The reminders are stored in a stack where the first coming reminder is placed as number one and so on. An expired reminder loses the time information and expired reminder and reminders stored without time information are placed at the end of the stack in alphabetic order.

The individual field of data on the cards 40.1-N are separated by line-feeds and the format of the cards 40.1-N are therefor prepared for transmission between terminals by means of the Nokia Smart Messaging Specification, revision 1.0.0; September 15, 1997.

At least the time fields or the text fields must be inputted in order to create a valid reminder. For each of the reminders having a valid alert time not yet passed the reminder controller 22 has established count down timers 28, and when an alerting time has been reached the reminder controller 22 starts the alerting by means of the buzzer 23, vibrator 24 and flashing of the backlight of the LCD 3. In dependence of the user action the reminder controller 22 clears the time data of the reminder or sets a new time if the user desires to snooze the alerting - hereby the count down timers will be disabled and enabled for a new alert time, respectively.

Preferably when an alert time has been entered by means of the text editor 27, the reminder controller 22 calculates the difference between the alert time and the present time and uses this difference as input to the count down timer 28. All the units in the reminder application may be implemented as software.

### Basic reminder handling.

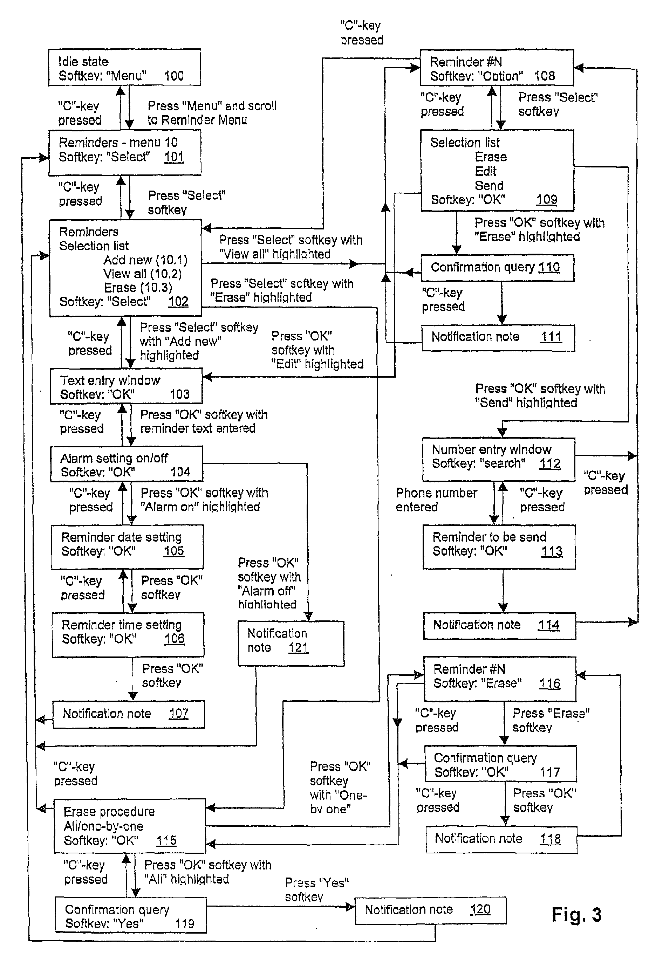

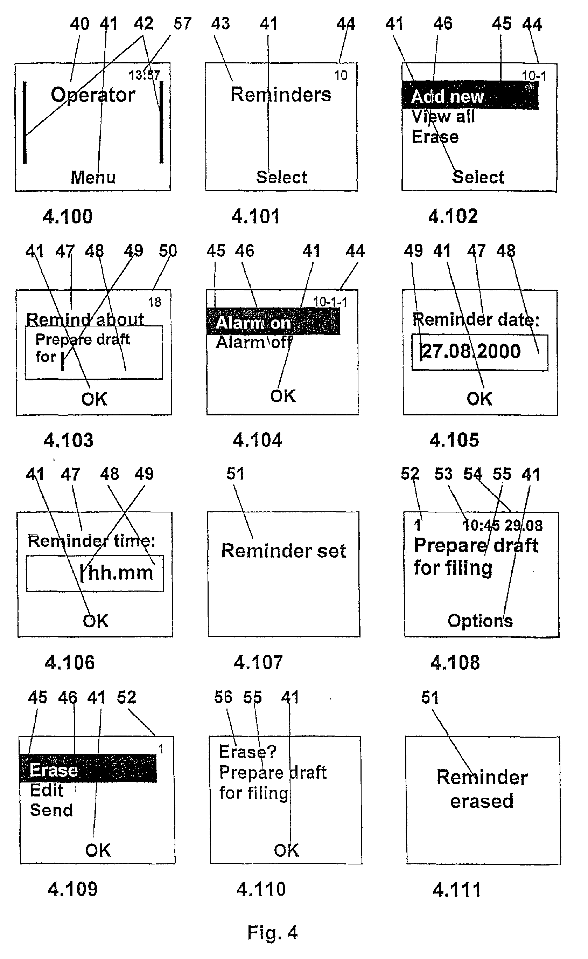

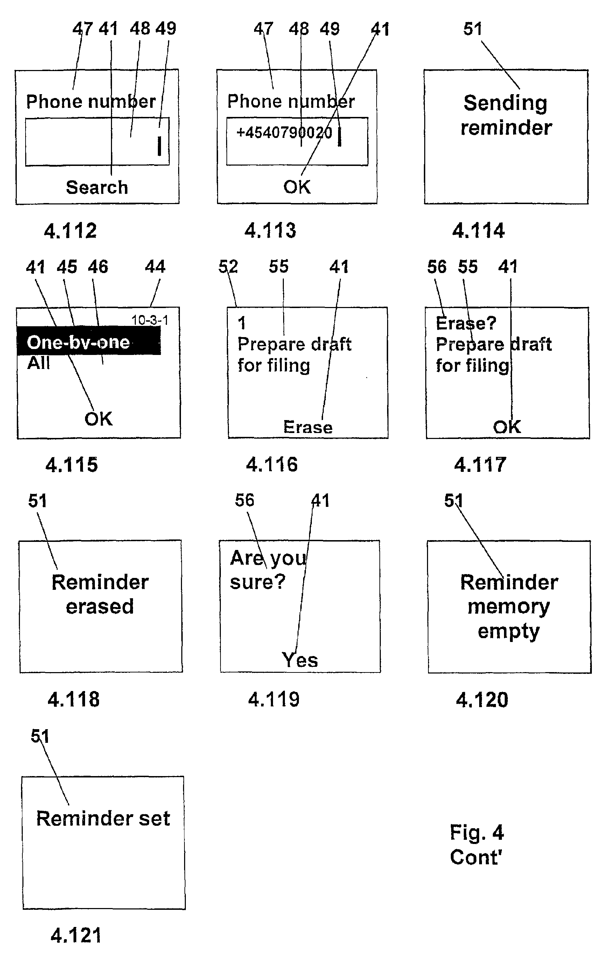

Basically the reminder memory aids the user to save short text notes with an alarm. The phone starts alarming when the set date and time is reached. In the following there will be made references to fig. 3 and 4. To access the reminder menu from idle state 100 (display 4.100 in fig. 4), in which the display includes battery and antenna bars 42, an operator identification label and a softkey label 41 informing the user that pressing the softkey 8 will give access to the menu structure.

In standby mode the user has to press the softkey 8 having the softkey label 41, "Menu" and scroll by using the scroll key 10 to menu level 10 in state 101(display 4.101 in fig. 4), giving access to the reminder menu when the softkey label 41, "Select" is pressed. A menu level indicator 44 and a menu name 43 identify the menu level. Pressing the "C" key 9 will bring the phone back to idle state 100.

When reminders has been selected a selection list pop up in state 102 (display 4.102 in fig. 4), whereby the user will have access to "add new" reminders, "View all" existing reminders and "Erase" the existing reminders. A highlighting bar 45 may be moved between the selectable items 46. Pressing the "C" key 9 will bring the phone back to state 101.

### Adding a new reminder.

By selecting "Add new" the user will have access to a text entry window 48 in state 103 (display 4.103 in fig. 4), where an information note 47 informs the user about the type of input, a blinking cursor 49 indicates where the next letter will be placed, and a data amount indicator 50 indicates the number of characters that may still be entered (in the preferred embodiment max 36). Pressing the scroll key 10 will move the cursor bar 49 between the entered characters. Pressing the "C" key 9 will delete the character on the left side of the bar 49 and long pressing (for at least 0.8 second) will bring the phone back to state 102.

When the user accepts the entered text by pressing the "OK" softkey 8 in display 4.103 the phone asks in state 104 (display 4.104 in fig. 4) whether the user wants to set the alarm "On" or "Off". Pressing the "C" key 9 will bring the phone back to state 103.

If the user wants to set the alarm by pressing the "OK" softkey 8 with the "Alarm on" option highlighted, the phone goes to state 105 (display 4.105 in fig. 4). Here the user is asked to enter a date with the present date as default. The cursor 49 is placed in the left side of the date and amending the date will only affect the entered numbers and the dots will stay fixed. The reminder controller 22 verifies the validity of the entered date and gives an error notification if the date is invalid. Pressing the "C" key 9 will delete the character at the left side of the bar 49 and if the bar 49 is placed to the left, pressing the "C" key 9 will bring the phone back to state 104.

When the user has accepted the entered date by pressing the "OK" softkey 8, the phone is in state 106 (display 4.106 in fig. 4) The user is invited to enter a reminder time. There is no default time but the suggested time is given as "hh.mm". Pressing the "C" key 9 will delete the character at the left side of the bar 49 and if the bar 49 is placed to the left, pressing the "C" key 9 will bring the phone back to state 105.

If the user accepts the entered reminder time by pressing the "OK" softkey 8, the phone is in state 107 (display 4.107 in fig. 4) a notification note saying that the reminder is set. After a few seconds the phone automatically goes back to the selection list pop up in state 102. The reminder is hereby stored as one of the cards 40.1-N in fig. 9 and the alert will sound when the time of the clock application reaches the alert time.

If the user in state 104 did not want to set the alarm, he has to press the "OK" softkey 8 with the "Alarm off" option highlighted, the phone goes to state 121 (display 4.121 in fig. 4). Here a notification note 51 will say that the reminder is set. After a few seconds the phone automatically goes back to the selection list pop up in state 102. The reminder is hereby stored as one of the cards 40.1-N in fig. 9 and no alert will sound. The reminder is stored without any setting of reminder time.

### Viewing existing reminders.

By selecting "View all" the user will have access to view the reminders available in the stack in state 108 (display 4.108 in fig. 4), where number 52 informs the user about number of the reminder in the stack, a first field 53 indicates the reminder time, and second field 54 indicates the reminder date. The full reminder test of the reminder is displayed in a text field 55, and the softkey 8 gives access to options that may be performed on the reminder. By pressing the scroll key 10 the preceding or succeeding reminders will be displayed. The two time fields 53 and 54 will be empty if the reminder does not contain any time information. Pressing the "C" key 9 will bring the phone back to state 102.

When the user selects the existing reminder for operation by pressing the "Option" softkey 8 in display 4.108 a selection list pops up in state 109 (display 4.109 in fig. 4), whereby the user will have access to "Erase", "Edit" and "Send" the selected reminder. Pressing the "C" key 9 will bring the phone back to state 108.

If the user wants to erase the selected reminder by pressing the "OK" softkey 8 with the "Erase" option highlighted, the phone goes to state 110 (display 4.110 in fig. 4). Here the user is asked to confirm his choice 56, and the full reminder text 55 is displayed. Pressing the "C" key 9 will bring the phone back to state 108 without deleting the selected reminder.

If the user confirms the deletion by pressing the "OK" softkey 8, the selected reminder will be deleted and a notification note will be displayed in state 111 (display 4.111 in fig. 4). The phone will then go back to state 108.

If the user in state 109 did select to edit one of the existing reminders the phone goes to the text entry window in state 103 (display 4.103 in fig. 4) with text of the selected reminder displayed in the window as already entered text. From this point the editing is handled as a new entry of a reminder with the present data as default.

The user in state 109 can also select to send one of the existing reminders to another terminal. This is done by sending the time and text content in a smart message according to the Nokia Smart Messaging Specification, and a receiving terminal supporting this specification will recognize the received message as a reminder, decode the message and store the received data as a reminder. In state 112 (display 4.112 in fig. 4) the user is requested to enter a phone number. This may be done by entering the phone number manually by using the key board 2 of by retrieving a phone number from a phonebook database in the phone by selecting the search functionality by pressing the softkey 8. Pressing the "C" key 9 will bring the phone back to state 108. When the user has started to enter the phone number manually or has retrieved the phone number from the phone number database, the softkey 8 change functionality to "OK" as it can be seen in state 113 (display 4.113 in fig. 4). Pressing the "C" key 9 will delete the number on the left side of the cursor bar 49, and when all characters have been deleted a further press on the "C" key 9 will bring the phone back to state 112. When "OK" is pressed in state 113, the reminder will be sent to the entered phone number, and a notification note in state 114 (display 4.114 in fig. 4) will inform the user that the reminder has been sent. After a few seconds the phone automatically goes back to the selection list pop up in state 108 and display the sent reminder.

### Erasing existing reminders.

By selecting "Erase" in state 102 the user will have to select whether the reminders should be delete one by one or all at the same time in state 115 (display 4.115 in fig. 4). Pressing the "C" key 9 will bring the phone back to state 102. By using the scroll key 10 the user may toggle between the selectable items. If the user selects to delete the reminders one by one, the phone goes to state 116 (display 4.116 in fig. 4) where the first reminder in the stack is displayed for the user. The position of the displayed reminder is indicated by a position indicator 52, the reminder text 55 is displayed, and the softkey label 41 tells that the softkey functionality is "Erase". The user may scroll through all the reminders by using the scroll key 10. Pressing the "C" key will bring the phone back to state 115.

If the user in state 116 presses the "Erase" softkey 8, he will in state 117 (display 4.117 in fig. 4) be asked to confirm the deletion of the reminder. Pressing the "C" key will bring the phone back to state 115. If he confirms the deletion by pressing the "OK" softkey 8 a notification saying that the reminder has been erased is shown in state 118 (display 4.118 in fig. 4). After a few seconds the phone automatically goes back to state 116 and displays the next reminder for deletion.

If the user in state 115 selects to delete all the reminders, the phone goes to state 119 (display 4.119 in fig. 4) where the user is asked to confirm the deletion. Pressing the "C" key will bring the phone back to state 115. If he confirms the deletion by pressing the "Yes" softkey 8 a notification saying that the reminder memory is empty is shown in state 120 (display 4.120 in fig. 4). After a few seconds the phone automatically goes back to the reminders menu in state 101.

### Receiving OTA reminders.

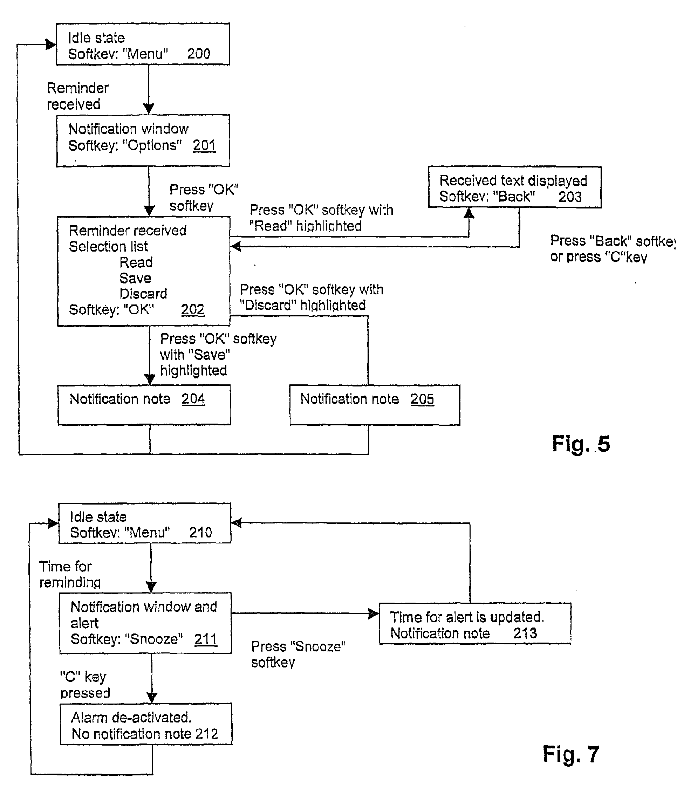

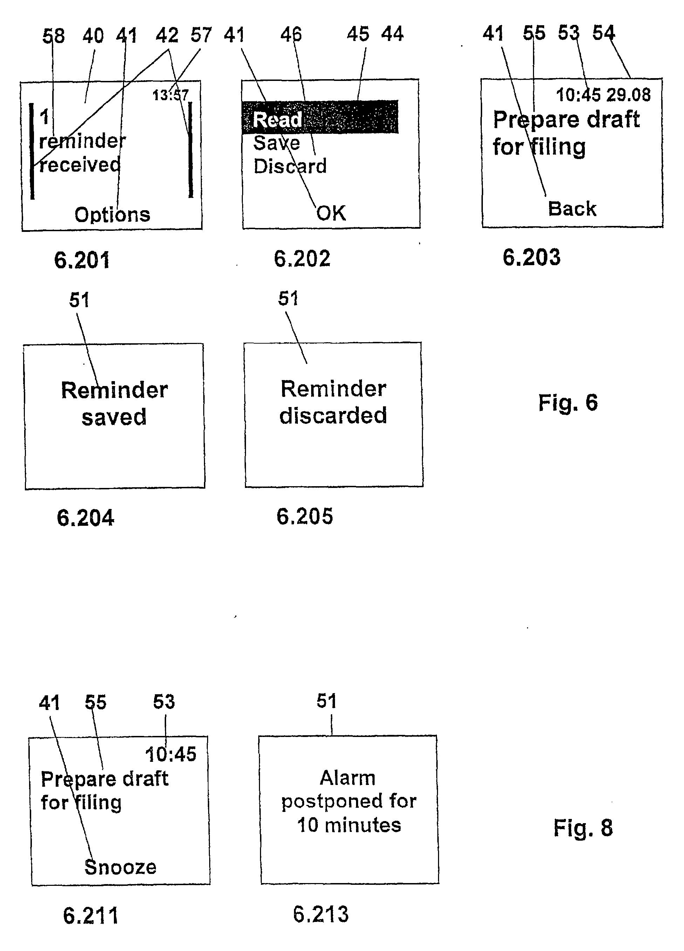

In the following there will be made references to fig. 5 and 6. As mentioned before a reminder may be sent as a Smart Message via a cellular network - Over The Air (OTA) - and when such a message is received the phone displays a notification text 58 informing the user about the reception of the OTA reminder. This notification 58 is displayed in the in the idle mode display and therefor the clock 57, and the antenna and battery bars 42 will be displayed. The softkey label will change from "Menu" in idle state 200 to "Option" in the notification window in state 201 (display 6.201 in fig. 6).

By selecting "Options" the user will have access to a selection list as shown in state 202 (display 6.202 in fig. 6). If the user select the "Read" option by pressing the "OK" softkey 8 with "Read" highlighted, the received reminder will be displayed in state 203 (display 6.203 in fig. 6), and will include an alerting time field 53, an alerting date field 54 and a text field 55. The time information is optional and if no time information is present the two time fields 53 and 54 will be empty. Pressing either the softkey 8 or the clear key 9 will bring the phone back to state 202.

If the user selects the "Save" option by pressing the "OK" softkey 8 with "Save" highlighted; the received reminder will be saved as a reminder and will be included in the reminder stack shown in fig. 9. A notification note 51 informs the user about the saving of the reminder in state 204 (display 6.204 in fig. 6), and the phone goes back to idle state.

If the user selects the "Discard" option by pressing the "OK" softkey 8 with "Discard" highlighted, the received reminder will be deleted without being saved. A notification note 51 informs the user about the discarding of the reminder in state 205 (display 6.205 in fig. 6), and the phone goes back to idle state.

### Reminder alerting.

In the following there will be made references to fig. 7 and 8. If the phone is switched on when the reminder time is reached, it sounds an alarm by means of the buzzer 23, flashes its backlights of the LCD 3 and displays the reminder text in state 211 (display 6.211 in fig. 8). Pressing any key can stop the alarm.

By pressing the "C" key 9 the alarm will be switched off and the alert time will be passed and the time information deleted. There will not be displayed any notification text in state 212, and the phone goes back to idle state.

In state 211 the softkey 8 will have "Snooze" as function, and by pressing the "Snooze" softkey 8, e.g. 10 minutes will be added to the alert time of the reminder card. A notification text is displayed in state 213 (display 6.213 in fig. 6) which will inform the user about the snooze time, and the phone goes back to idle state.

Reminders allow the user to set an alarm for a certain time, with an attached text to remind them of an important event or task. The concept provides to some extent the same functionality as a calendar function, but it is based on a much simpler architecture and it requires a much smaller memory capacity. A calendar is series of pages showing dates. Calendar is also used for entering appointments, special events, etc. However Calendar applications are quite memory consuming, and therefor it is desired not to include Calendars in mobile terminals at the basic segment (cheap phones and other kind of terminals).

According to the preferred embodiment of the invention the user can add up to ten reminders to the memory. If the reminder list is full (i.e. there is no space to save the received reminder), the user is asked if they wish to replace an existing reminder from the list. If the user chooses to replace an existing reminder, the new reminder is automatically saved, and the user is informed using a notification text.

Reminders are displayed using the text, which the user has input. If the text is too long to be displayed on one line, it is truncated. The reminders are listed in time order, according to expiry time. This means that the next reminder to expire will always be at the top of the list. An icon may indicate whether or not the reminder has expired. Reminders with no alarm attached are listed under those with alarms.

However in a further embodiment an icon may indicate if the reminder has expired or not yet expired.

The valid value for date is checked in all date entries as follows:
- The first digit in the date field can be 0,1,2,or 3.
- The second digit in the date field can be 0 or 1, if the first digit in date field is 3. The second digit in the date field cannot be 0 if the first digit in the date field is 0. Otherwise the second digit in the date field can be any digit from 0-9.
- The first digit in the month field can be 0 or 1.
- The second digit in the month field can be 0, 1, or 2 if the first digit in the month field is 1. The second digit in the month field cannot be 0 if the first digit in the month field is 0. Otherwise the second digit in the month field can be any digit from 0-9.
- The first two digits in the year field must be 20. (four digit format)
- The third and the fourth digit can be any digit. (four digit format)

If the date is invalid and the user confirms it, an error note is shown, and the invalid date entry is restored with the cursor in the first invalid field.

The user is prompted for time in a few different situations. The time entry is done in each situation in the same way. The time format may be language dependent.

## Claims

1. A method of handling reminders in a handportable communication terminal, comprising
• manually entering of character into a text editor window for providing a reminder text,
• entering time information into a time entry window for setting a reminder time,
• providing real time clock information from a clock application,
• comparing said time information with the real time clock information, and
• alerting when the real time clock has reached said reminder time.

2. A method according to claim 1, wherein the alerting comprises display of the reminder text.

3. A handportable communication terminal, including
• a control unit,
• a user interface including a display, text input means, and said user interface is controlled by the control unit,
• a clock application controlled by the control unit, and having a clock function and a reminder application which the display can present,
• said reminder application has:
• a text editor window in which the user through the user interface enters a reminder text label, and
• a time entry window in which the user through the user interface enters a date and time for the reminder,
• and an alert unit that alerts when the clock reaches the entered date and time for the reminder.

4. A handportable communication terminal according to claim 3, and comprising a clock application providing real time clock information to the reminder application, and said reminder application displays a reminder note when the real time clock has reached the reminder time.

5. A handportable communication terminal according to claim 3, wherein the reminder application provides the user access to "Add new" reminders, "View all" existing reminders and "Erase" existing reminders.

6. A handportable communication terminal according to claim 3, wherein the reminder application allows the user to transmit a reminder to a remote second communication terminal via a wireless communication network.

7. A handportable communication terminal according to claim 6, wherein the reminder application upon receiving instructions to send a reminder requests the user to enter a phone number on the receiver of the reminder.

8. A handportable communication terminal according to claim 7, wherein the reminder application allows the user to search for the phone number of the receiving terminal in an internal phone number database of the transmitting terminal.

9. A handportable communication terminal according to claim 6, wherein the reminder application allows the user to inspect a reminder received from a remote second communication terminal via a wireless communication network.

10. A handportable communication terminal according to claim 9, wherein the reminder application furthermore allows the user to save or discard a reminder received from a remote second communication terminal.

11. A handportable communication terminal according to any of the claims 6-10, wherein the reminders are transferred via the wireless communication network included in a message according to the Smart Messaging Specification.
